Europäisches Patentamt

European Patent Office

Office européen des brevets

(11) Veröffentlichungsnummer: **0 476 315 A1**

# EUROPÄISCHE PATENTANMELDUNG

(21) Anmeldenummer: **91113747.9**

(22) Anmeldetag: **16.08.91**

(51) Int. Cl.5: **A47B 87/00**, A47B 13/02, F16B 12/44

(30) Priorität: **25.08.90 DE 4026910**

(43) Veröffentlichungstag der Anmeldung: **25.03.92 Patentblatt 92/13**

(84) Benannte Vertragsstaaten: **AT BE CH DE DK ES FR GB GR IT LI LU NL SE**

(71) Anmelder: **KÖNIG & NEURATH KG**
**Industriestrasse 8, Postfach 1140**
**W-6367 Karben 1(DE)**

(72) Erfinder: **Gingele, Thomas**
**Beurener Strasse 24**
**W-7275 Simmersfeld-Ettmannsweiler(DE)**
Erfinder: **Gerlach, Thomas**
**Hummelbergweg 24**
**W-7271 Egenhausen(DE)**
Erfinder: **Howell, Bryan**
**Schulstrasse 21**
**W-7264 Zavelstein(DE)**

(74) Vertreter: **Vogel, Georg**
**Pat.-Ing. Georg Vogel**
**Hermann-Essig-Strasse 35 Postfach 11 65**
**W-7141 Schwieberdingen(DE)**

(54) **Bausatz für Bürotische mit Tischplatte und Tischgestell.**

(57) Die Erfindung betrifft einen Bausatz für Bürotische aus Tischplatte und Tischgestell. Dieser Bausatz aus wenigen einfachen Teilen mit vielseitiger Ausbaumöglichkeit von Bürotischkombinationen ist dadurch gekennzeichnet, daß die Verbindungselemente (11) als Verbindungsbolzen ausgebildet sind, die in allen vier Eckbereichen der Unterseite der Rechteck-Tischplatten (10) angebracht oder anbringbar sind, daß die Aufnahmen (11) in der oberen Stirnseiten der Tischbeine (20) als Bohrungen mit mindestens einer Klemmschraube (26) ausgebildet sind, und daß die Tischbeine (20) im oberen Endbereich umlaufend Anschlußaufnahmen (22) für am Tischbein abstehende Stützbeine (14) tragen.

FIG.10

FIG.11

EP 0 476 315 A1

Die Erfindung betrifft einen Bausatz für Bürotische mit Tischplatten und Tischgestell, der aus Rechteck-Tischplatten, die mit dem Tischgestell verbindbar sind, und aus Tischbeinen mit vier im Bereich der oberen Stirnseite im Quadrat angeordneten Aufnahmen für Verbindungselemente besteht.

Ein derartiger Bausatz ist aus der DE-OS 27 31 514 bekannt. Bei diesem bekannten Bausatz sind die Aufnahmen in den Tischbeinen als von der Stirnseite aus zugängliche, hinterschnittene Aufnahmenuten ausgebildet, in die entsprechend geformte Verbindungselemente einschiebbar und darin unverlierbar festlegbar sind. An den Verbindungselementen sind Horizontalträger anbringbar, die das Tischgestell vervollständigen. Die Rechteck-Tischplatten werden mit diesen Horizontalträgern verschraubt.

Bei diesem bekannten Bausatz ist das Tischgestell sehr aufwendig, da für die Verbindung von vier Tischbeinen auch vier Horizontalträger und acht Verbindungselemente benötigt werden. Außerdem ist mit diesem Bausatz kein Bürotisch aufbaubar, der an einer Kante der Rechteck-Tischplatte keine unterstützenden und die Beinfreiheit beeinträchtigenden Tischbeine erfordert.

Aus dem DE-GM 86 12 880 ist ein Bürotisch bekannt, der im Bereich der hinteren Kante der Rechteck-Tischplatte nur in deren Eckbereichen zwei Tischbeine aufweist. An diesen Tischbeinen sind Stützbeine angebracht, die die Standfläche definieren und die Standsicherheit des Bürotisches bringen. Die Rechteck-Tischplatte wird durch zusätzliche Streben unterstützt, die sich an den Stützbeinen abstützen. Im Bereich der vorderen Kante der Rechteck-Tischplatte sind keine Tischbeine erforderlich.

Aus der US-PS 3,883,104 ist es bekannt, Verbindungselemente beim Aufbau von Tischen als Bolzen, vorzugsweise Gewindebolzen, auszubilden und so die miteinander zu verbindenden Teile zu verschrauben.

Die EP-A2 0 380 995 zeigt einen Bausatz für Bürotische, der auch Viertelkreis-, Halbkreis- und Kreisring-Tischplatten sowie Längs- und Quertraversen aufweist.

Es ist Aufgabe der Erfindung, einen Bausatz der eingangs erwähnten Art zu schaffen, bei dem das Tischgestell keine zusätzlichen Horizontalträger erfordert und mit dem Bürotische aufgebaut werden können, bei denen mindestens eine Tischkante frei von Tischbeinen ist.

Diese Aufgabe wird nach der Erfindung mit einem Bausatz gelöst, der dadurch gekennzeichnet ist, daß die Verbindungselemente als Verbindungsbolzen ausgebildet sind, die in allen vier Eckbereichen der Unterseite der Rechteck-Tischplatten angebracht oder anbringbar sind, daß die Aufnahmen in der oberen Stirnseite der Tischbeine als Bohrungen mit mindestens einer Klemmschraube ausgebildet sind, und daß die Tischbeine im oberen Endbereich umlaufend Anschlußaufnahmen für am Tischbein abstehende Stützbeine tragen.

Das Tischgestell weist nur Tischbeine und Stützbeine auf, da die Rechteck-Tischplatten die Verbindungselemente tragen und so die Funktion der Horizontalträger des bekannten Bausatzes übernehmen. Da die Tischbeine am oberen Ende umlaufend zusätzliche Anschlußaufnahmen für Stützbeine aufweisen, können die Stützbeine in verschiedenen Winkelstellungen am Tischbein angebracht werden. Dies erhöht die Variationsmöglichkeiten mit dem Bausatz, so daß die unterschiedlichsten Formen von zusammengesetzten Bürotischen erstellt werden können. Für einen Bürotisch mit einer einzigen Rechteck-Tischplatte werden nur zwei Tischbeine, zwei Stützbeine mit Streben und zwei Verbindungselemente benötigt, so daß der Aufwand für das Tischgestell erheblich reduziert ist.

Die Ausbildung ist nach einer Ausgestaltung so, daß die Tischbeine als Kegelstumpf-Hohlsäulen und die Anschlußaufnahmen als Bohrungen ausgebildet sind, daß in die oberen Stirnseiten der Kegelstumpf-Hohlsäulen Verbindungseinsätze mit auf die Anschlußaufnahmen abgestimmten Bohrungen einsteckbar sind, daß die Kegelstumpf-Hohlsäulen mit Deckeln verschcließbar sind, in die die Aufnahmen für die Verbindungselemente der Tischplatten eingebracht sind, daß die Verbindungseinsätze auf die Aufnahmen der Deckel ausgerichtete Aufnahme-Sacklochbohrungen aufweisen und daß die Klemmschrauben in diese Aufnahme-Sacklochbohrungen der Verbindungseinsätze münden.

Die Stützbeine können dann aus dem Einsatzverbinder heraus an das Tischbein angeschraubt werden. Die dem Tischbein zugekehrte Stirnseite des Stützbeines braucht dabei nur Gewindeaufnahmen haben. Die durch die Aufnahmen im Deckel in die Aufnahme-Sacklochbohrungen des Einsatzverbinders eingeführten Verbindungsbolzen der Rechteck-Tischplatten werden mit den Klemmschrauben festgelegt, so daß die Rechteck-Tischplatten fest mit den Tischbeinen verbunden sind. Die an dem Tischbein angebrachten Stützbeine vergrößern die Standfläche des Bürotisches bzw. der Bürotischkombination. Die Bedienung der Klemmschrauben wird dadurch erleichtert, daß die Klemmschrauben in einem Endabsatz des Verbindungseinsatzes zugänglich sind, der aus der Kegelstumpf-Hohlsäule ragt, mittels eines umlaufenden Gummiringes und mittels des Deckels abdeckbar ist.

Ist zudem vorgesehen, daß der Endabsatz des Verbindungseinsatzes umlaufend mit zusätzlichen Bohrungen für die Stützbeine versehen ist, die in gleicher Winkelteilung eingebracht sind, wie die Anschlußaufnahmen der Kegelstumpf-Hohlsäulen, dann kann jedes Stützbein mit zwei Schrauben am Tischbein festgelegt werden, wobei dann das Stützbein den Einsatzverbinder unverlierbar im Tischbein festhält.

Die Variationsmöglichkeiten mit dem Bausatz nach der Erfindung lassen sich dadurch erhöhen, daß der Bausatz zusätzlich Halbkreis-Tischplatten und/oder Viertelkreis-Tischplatten und/oder Viertelkreisring-Tischplatten umfaßt.

Ist vorgesehen, daß der Bausatz zusätzlich Längs- und Quertraversen umfaßt, die an die Länge und Breite der Rechteck-Tischplatten angepaßt sind, dann können die für das Tischgestell einer Bürotischkombination erforderlichen Tischbeine und Stützbeine zu einem vormontierten Tischgestell als Einheit zusammengebaut werden.

Die Erfindung wird anhand von verschiedenen, in den Zeichnungen dargestellten Ausführungsbeispielen näher erläutert. Es zeigt:

Fig. 1          die Rechteck-Tischplatte,
Fig. 2          die Längstraverse,
Fig. 3          die Quertraverse,
Fig. 4          das Stützbein mit Strebe,
Fig. 5          das als Kegelstumpf-Hohlsäule ausgebildete Tischbein,
Fig. 6          die Viertelkreis-Tischplatte,
Fig. 7          die Halbkreis-Tischplatte,
Fig. 8          die Viertelkreisring-Tischplatte,
Fig. 9          in Explosionsdarstellung die Teile am oberen Ende des Tischbeines,
Fig. 10         das fertig montierte obere Ende eines Tischbeines mit Stützbein und Rechteck-Tischplatte,
Fig. 11         in perspektivischer Darstellung die Teile für einen einzelnen, freistehenden Bürotisch,
Fig. 12         in Draufsicht den fertig montierten Bürotisch nach Fig. 11,
Fig. 13         in Draufsicht einen Doppel-Bürotisch mit zwei Rechteck-Tischplatten,
Fig. 14         in Draufsicht einen Doppel-Bürotisch mit zwei Rechteck-Tischplatten, jedoch anders aufgebautem Tischgestell,
Fig. 15 bis 17  schematisch die drei Anschlußmöglichkeiten für eine Rechteck-Tischplatte am oberen Ende eines Tischbeines,
Fig. 18         in Draufsicht eine Halbrund-Bürotischkombination mit einer Halbkreis-Tischplatte oder zwei Viertelkreis-Tischplatten,
Fig. 19         in Draufsicht eine Rund-Bürotischkombination mit zwei Halbkreis-Tischplatten oder vier Viertelkreis-Tischplatten,
Fig. 20         in Draufsicht eine Oval-Bürotischkombination mit vier längsgerichteten Rechteck-Tischplatten und zwei abschließenden Halbkreis-Tischplatten,
Fig. 21         in Draufsicht eine Oval-Bürotischkombination mit drei quergerichteten Rechteck-Tischplatten und zwei abschließenden Halbkreis-Tischplatten,
Fig. 22         in Draufsicht eine Kreis-Bürotischkombination mit vier Viertelkreisring-Tischplatten,
Fig. 23         in Draufsicht eine O-förmige Bürotischkombination mit zwei Rechteck-Tischplatten und vier Viertelkreisring-Tischplatten,
Fig. 24         in Draufsicht eine in der Mitte freie Quadrat-Bürotischkombination mit vier Rechteck-Tischplatten und vier Viertelkreis-Tischplatten,
Fig. 25         in Draufsicht eine in der Mitte freie Rechteck-Bürotischkombination mit sechs Rechteck-Tischplatten und vier Viertelkreisring-Tischplatten und
Fig. 26         in Draufsicht eine U-förmige Bürotischkombination mit vier Rechteck-Tischplatten und zwei Viertelkreisring-Tischplatten.

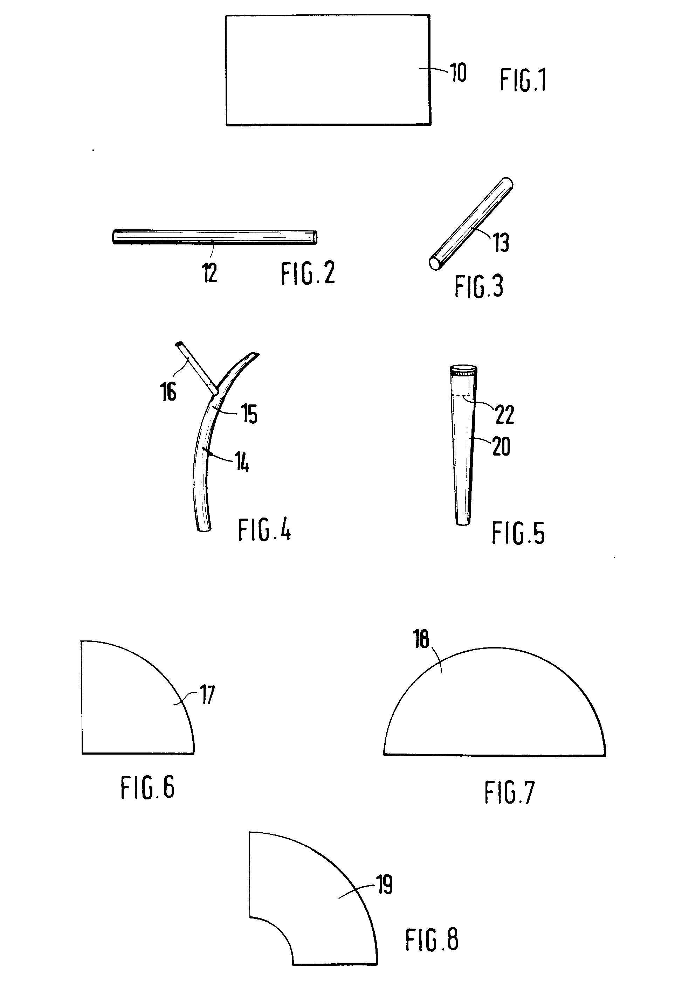

In Fig. 1 ist die Rechteck-Tischplatte 10 gezeigt, bei der die Länge und die Breite im Verhältnis 2:1 steht und z.B. mit 1600 mm und 800 mm gewählt sind.

Fig. 2 zeigt einen Profilabschnitt, der als Längstraverse 12 verwendet wird, wenn zwei einer Längsseite der Rechteck-Tischplatte 10 zugeordnete Tischbeine miteinander zu verbinden sind. Die Quertraverse 13 nach Fig. 3 wird zur Verbindung der einer Schmalseite der Rechteck-Tischplatte 10 zugeordneten Tischbeine verwendet.

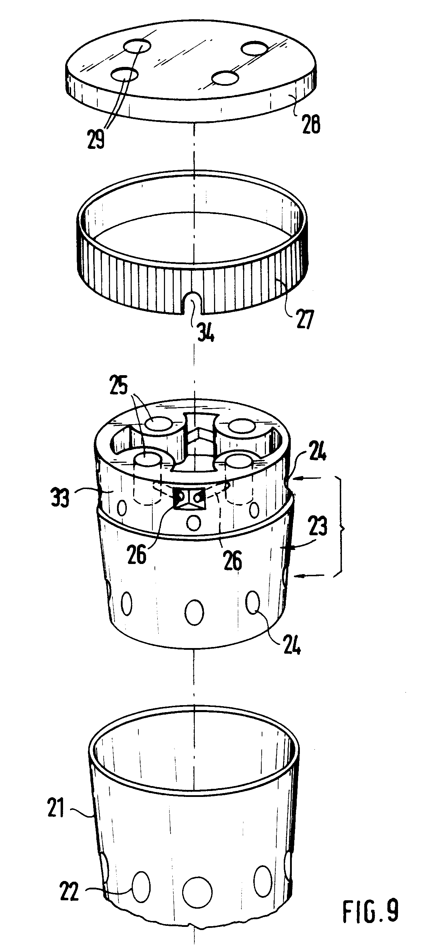

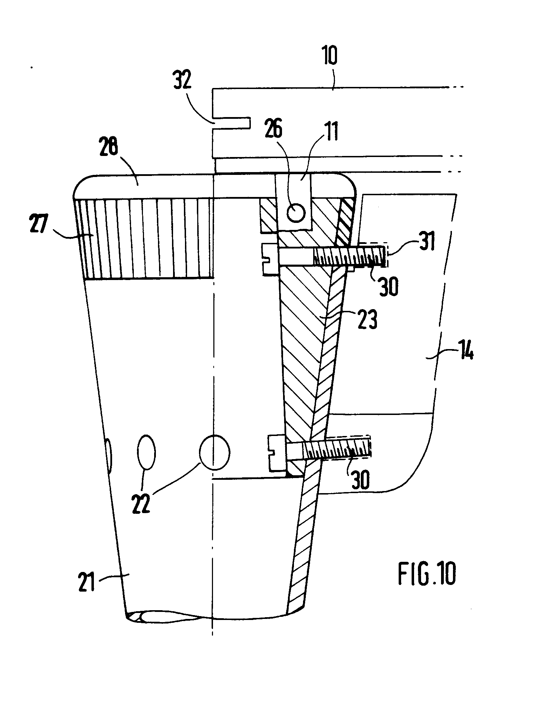

Das Tischbein 20 nach Fig. 5 ist im Prinzip ein sich nach unten verjüngender Kegelstumpf. Sein Aufbau wird später anhand der Fig. 9 und 10 in Einzelheiten erläutert. Wesentlich ist, daß unterhalb der oberen Stirnseite umlaufend in einheitlicher Winkelteilung, von z.B. 45°, Anschlußaufnahmen 22 für in Fig. 4 gezeigte Stützbeine 14 eingebracht sind. Das Stützbein 14 ist ein konvex nach oben gewölbter Profilabschnitt 15, dessen oberes Ende am Tischbein 20 festgeschraubt wird und dessen unteres Ende mit dem unteren Ende des Tischbeines 20 in der Standebene liegt. An dem Profilabschnitt 15 ist nach oben weisend die Strebe 16 angebracht, die einen zusätzlichen Abstützpunkt für die Tischplatte bildet und daher mit dem oberen Ende des Tischbeines 20 in einer Auflageebene für die Tischplatte 20 liegt, sobald das Stützbein 14 an dem Tischbein 20 befestigt ist. Der Profilabschnitt 15 kann mit der Strebe 16 fest oder lösbar verbunden sein.

In den Fig. 6 bis 8 sind weitere Tischplatten zur Erweiterung des Bausatzes gezeigt. Die Viertelkreis-Tischplatte 17 nach Fig. 6 und die Halbkreis-Tischplatte 18 nach Fig. 7 haben denselben Radius, der der Breite der Rechteck-Tischplatte 10 entspricht, d.h. auch z.B. 800 mm beträgt. Bei der Viertelkreisring-Tischplatte 19 nach Fig. 8 bestimmt der Radius des Innenkreises den Freiraum im Inneren einer Bürotischkombination. Der Radius des Außenkreises ist so gewählt, daß die Differenz der Radien eine gerade Anschlußkante bildet, die der Breite der Rechteck-Tischplatte 10 entspricht.

Wie die Fig. 9 und 10 zeigen, ist das Tischbein 20 aus einer Kegelstumpf-Hohlsäule 21 gebildet, die unterhalb der oberen, sich erweiternden Öffnung die Anschlußaufnahmen 22 aufweist, die als Bohrungen ausgebildet sind. In das obere Ende der Kegelstumpf-Hohlsäule 21 wird der Verbindungseinsatz 23 eingesteckt, bis die Bohrungen 24 des Verbindungseinsatzes 23 mit den Anschlußaufnahmen 22 der Kegelstumpf-Hohlsäule 21 fluchten. Dabei ragt der Verbindungseinsatz 23 noch mit dem Absatz 33 aus der Kegelstumpf-Hohlsäule 21. Der Absatz 33 trägt in gleicher Winkelteilung wie die Winkelteilung der Anschlußaufnahmen 22 weitere Bohrungen 24, so daß das Stützbein 14 mit zwei Schrauben 30 an die Kegelstumpf-Hohlsäule 21 angeschraubt werden kann.

Wie Fig. 10 zeigt, sind in die zugekehrte Stirnseite des Stützbeines 14 die Gewindeaufnahmen 31 eingebracht, in die die Schrauben 30 vom Innenraum des Verbindungseinsatzes 23 aus eingeschraubt werden. In die Oberseite des Verbindungseinsatzes 23 sind die auf den Ecken eines Quadrates angeordneten Aufnahme-Sacklochbohrungen 25 eingebracht, in die Verbindungsbolzen 11 einführbar sind, welche in den Eckbereichen der Rechteck-Tischplatten 10 an der Unterseite vorstehen. Von der Außenseite des Absatzes 33 aus sind Klemmschrauben 26 betätigbar, die in die Aufnahme-Sacklochbohrungen 25 münden. Damit lassen sich die eingeführten Verbindungsbolzen 11 der Rechteck-Tischplatte 10 festlegen und damit die Rechteck-Tischplatte 10 fest mit den Tischbeinen 20 verbinden. Die Oberseite der Tischbeine 20 ist aber vorher mit dem Deckel 28 verschlossen, der mit seinen vier Bohrungen 29 auf die Aufnahme-Sacklochbohrungen 25 im Verbindungseinsatz 23 ausgerichtet ist. Der Absatz 33 des Verbindungseinsatzes 23 wird mit dem Gummiband 27 abgedeckt, das Aussparungen 34 zum Passieren der oberen Schrauben 26 für das Stützbein 14 aufweist. Die Rechteck-Tischplatte 10 kann zumindest an der Vorderkante eine Nut 32 für eine Abschlußleiste 35 tragen.

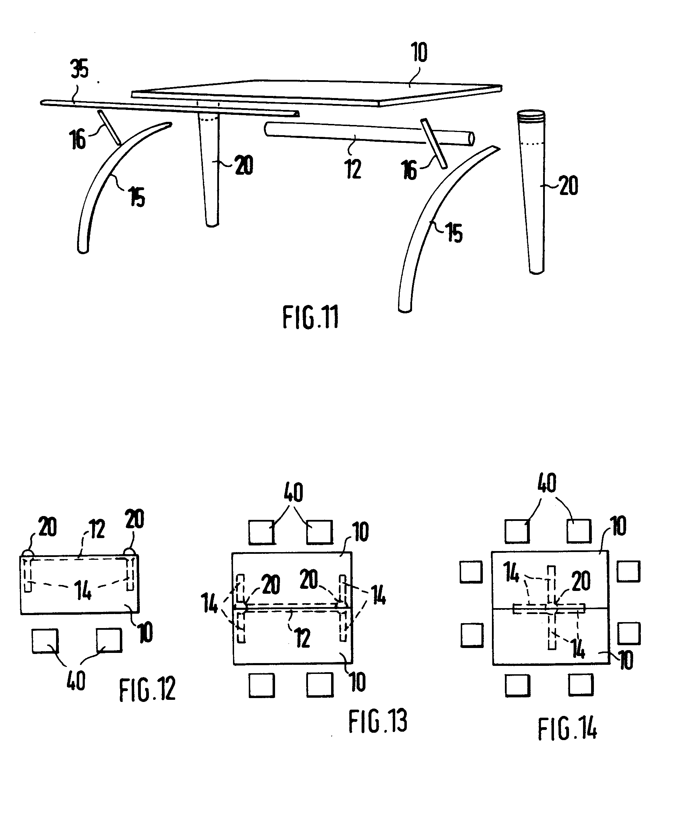

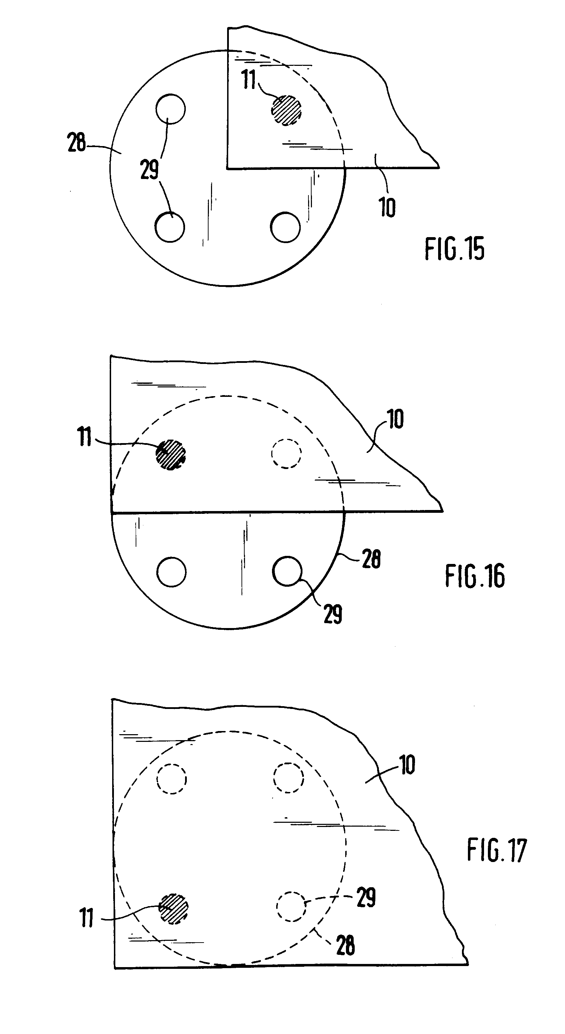

Der einzelne, freistehende Bürotisch nach Fig. 11 besteht aus zwei kompletten Tischbeinen 20, zwei Stützbeinen 14, der Längstraverse 12 und der Rechteck-Tischplatte 10. Die Stützbeine 15 sind mit den Hohlprofilen 15 nach vorne gerichtet mit den Tischbeinen 20 verbunden. Die Längstraverse 12 verbindet die beiden Tischbeine 20. Die an den Stützbeinen 14 angebrachten Streben 16 bilden mit den oberen Stirnseiten der Tischbeine 20 eine Vierpunktauflage für die Rechteck-Tischplatte 10 und die Tischbeine 20 und die Stützbeine 15 bilden mit ihren unteren Enden die Standfläche des Bürotisches. Wie die Draufsicht nach Fig. 12 zeigt, bietet die Vorderseite des Bürotisches Platz für zwei Stühle 40. Die Verbindung der Rechteck-Tischplatte 10 mit den Tischbeinen 20 erfolgt nach Fig. 16, so daß der halbe Querschnitt der Tischbein-Oberseite freiliegt. Die Verbindung könnte auch nach Fig. 17 erfolgen, so daß die gesamte Tischbein-Oberseite durch die Rechteck-Tischplatte 10 abgedeckt wäre.

Eine Doppel-Bürotischkombination nach Fig. 13 läßt sich aus zwei Rechteck-Tischplatten 10 aufbauen. Da die Länge zur Breite der Rechteck-Tischplatte 10 im Verhältnis 2:1 steht, ergibt sich eine quadratische Tischfläche. Das Tischgestell umfaßt zwei Tischbeine 20 mit jeweils einem nach vorne und einem nach hinten gerichteten Stützbein 14. Beide Tischbeine 20 sind durch die Längstraverse 12 miteinander verbunden. Die Rechteck-Tischplatten 10 werden entsprechend Fig. 16 mit den Tischbeinen 20 verbunden. Der Doppel-Bürotisch nach Fig. 13 bietet Platz für vier Stühle 40.

Die Doppel-Bürotischkombination nach Fig. 14 hat gegenüber der Doppel-Bürotischkombination nach Fig. 13 ein anderes, zentrisches Tischgestell mit einem einzigen Tischbein 20, an dem um 90° versetzt die vier Stützbeine 14 angebracht sind, die parallel zu den Seiten der zusammengesetzten Tischfläche verlaufen. Daher sind alle vier Tischseiten beinfrei und die Doppel-Bürotischkombination kann mit acht Stühlen 40 versehen werden.

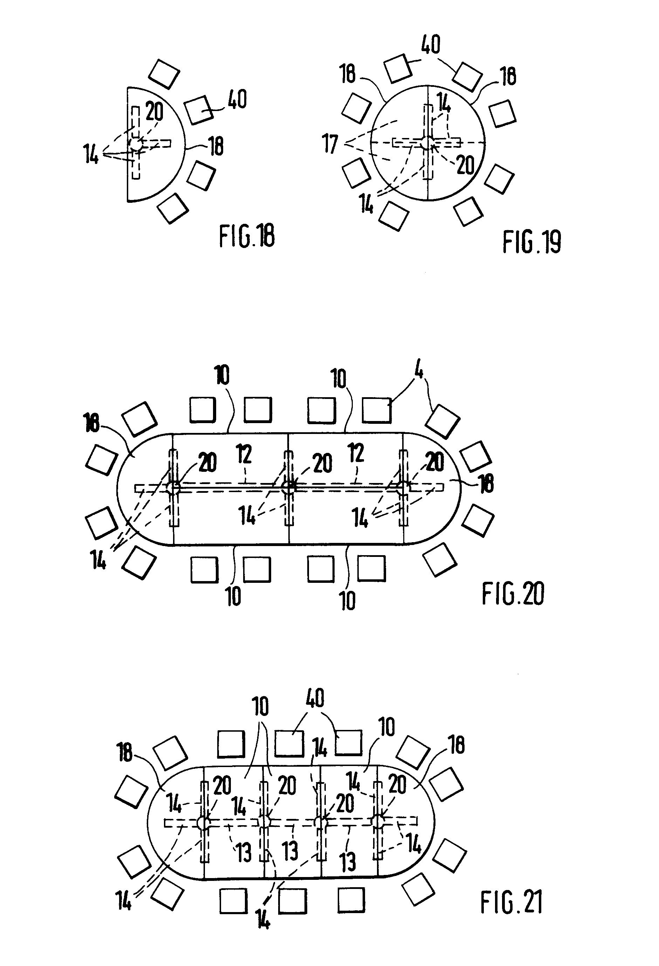

Die Halbkreis-Bürotischkombination nach Fig. 18 verwendet eine Halbkreis-Tischplatte 18 nach Fig. 7 oder zwei Viertelkreis-Tischplatten 17 nach Fig. 6. Das Tischgestell besteht aus einem Tischbein 20 an dem drei Stützbeine 14 abzweigen und eine dreieckförmige Stützfläche für die Halbkreis-Tischplatte 18 oder die beiden Viertelkreis-Tischplatten 17 bilden. Wird die Bürotischkombination als Rund-Bürotischkombination ausgebildet, dann werden zwei Halbkreis-Tischplatten 18 oder vier Viertelkreis-Tischplatten 17 zusammengesetzt, wie Fig. 19 zeigt. Das zentrische Tischbein 20 hat vier Stützbeine 14, die im Winkel von 90° gegeneinander versetzt sind und auf die Trennlinien der zusammengesetzten Tischfläche ausgerichtet sind. Das obere Ende der Streben 16 der Stützbeine 14 kann dabei als Doppelbefestigungslasche auslaufen, so daß sie an beide aufeinanderstoßende Tischplatten angeschraubt werden kann. Die Halbrund-Bürotischkombination nach Fig. 18 bietet vier Personen Platz, während an der Rund-Bürotischkombination nach Fig. 19 acht Personen Platz finden, wie mit den Stühlen 40 angedeutet ist. Werden Viertelkreis-Tischplatten 17 verwendet, dann belegen diese nur ein Viertel der Tischbein-Oberseite, wie Fig. 15 zeigt.

Die Oval-Bürotischkombination nach Fig. 20 umfaßt vier Rechteck-Tischplatten 10 und zwei Halbkreis-Tischplatten 18. Das Tischgestell beseht aus drei Tischbeinen 20, die mittels zweier Längstraversen 12 miteinander verbunden sind.

Vervollständigt wird das Tischgestell durch acht Stützbeine 14, wovon an den End-Tischbeinen 20 jeweils drei und an dem mittleren Tischbein 20 zwei angebracht sind. Diese Oval-Bürotischkombination bietet Platz für 16 Personen und kann mit jeweils zwei weiteren Rechteck-Tischplatten 20 und einem Tischbein 20 mit zwei Stützbeinen 14 um jeweils vier Plätze erweitert werden.

Bei der Oval-Bürotischkombination nach Fig. 21 stehen die Rechteck-Tischplatten 20 quer. Der Aufwand für das Tischgestell ist größer, da für die kleinere Ausführung von drei Rechteck-Tischplatten 10 und zwei Halbkreis-Tischplatten 18 jetzt vier Tischbeine 20 und zehn Stützbeine 14 erforderlich sind. Die Erweiterung um eine Rechteck-Tischplatte 10 erfordert auch wieder ein Tischbein 20 und zwei Stützbeine 14. Die Verbindung der Tischbeine 20 übernehmen jetzt die drei kürzeren Quertraversen 13. Mit jeder weiteren Rechteck-Tischplatte 20 werden zwei weitere Plätze geschaffen.

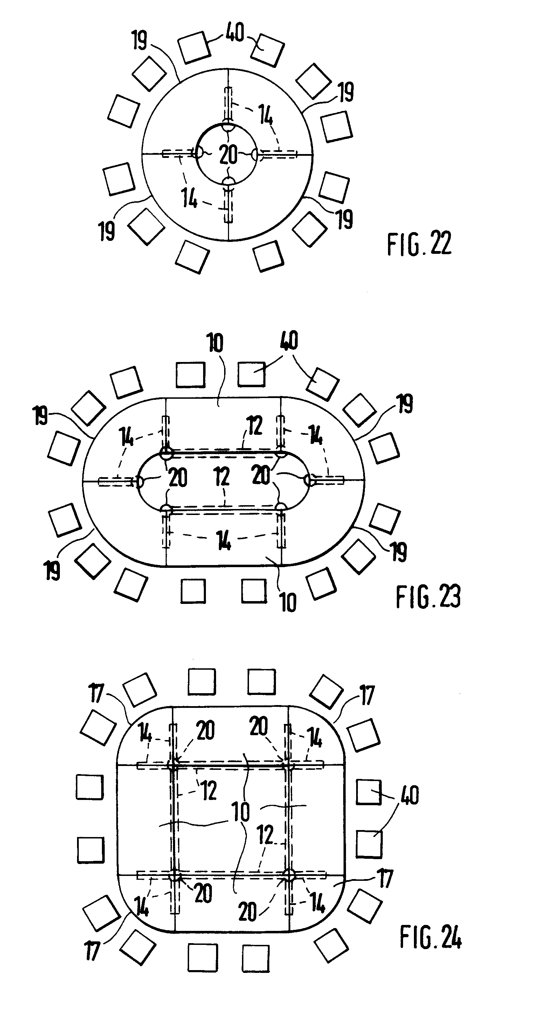

Die Rund-Bürotischkombination nach Fig. 22 hat einen inneren Freiraum, der durch den aus vier Viertelkreisring-Tischplatten 19 umschlossen wird. Die Tischbeine 20 stehen am Innenkreis und unterstützen mit ihren radial nach außen gerichteten Stützbeinen 12 die Viertelkreisring-Tischplatten 19 an den aufeinanderstoßenden geraden Kanten. Diese Rund-Bürotischkombination bietet Platz für 12 Personen.

Die Oval-Bürotischkombination nach Fig. 23 hat einen ovalen inneren Freiraum, der durch die einander zugekehrten Längsseiten der beiden Rechteck-Tischplatten 10 und dem Innenradius der vier Viertelkreisring-Tischplatten 19 begrenzt ist. Alle Trennfugen werden von einem Tischbein 20 und einem nach außen gerichteten Stützbein 14 unterstützt, wobei die Tischbeine 20 an dem Innenraum vorstehen, da die Verbindung der Tischplatten entsprechend Fig. 16 erfolgt. Das Tischgestell umfaßt sechs Tischbeine 20 und auch sechs Stützbeine 14. Eine Erweiterung um zwei Rechteck-Tischplatten 10 erfordert zwei weitere Tischbeine 20 mit je einem Stützbein 14. Der Platz an der Oval-Bürotischkombination nach Fig. 23 reicht für 16 Personen und kann mit zwei weiteren Rechteck-Tischplatten 10 um jeweils vier weitere Plätze erweitert werden. Das Tischgestell wird durch die beiden Längstraversen 12 vervollständigt.

Die Quadrat-Bürotischkombination nach Fig. 24 hat einen inneren quadratischen Freiraum, der durch die Länge der Rechteck-Tischplatten 10 gegeben ist. Die Ecken werden durch die vier Viertelkreis-Tischplatten 17 vervollständigt. Diese Quadrat-Bürotischkombination bietet ebenfalls 16 Personen Platz, erfordert aber nur vier Tischbeine 20 mit jeweils zwei Stützbeinen 14. Die vier Tischbeine 20 werden mittels vier Längstraversen 12 miteinander verbunden. Die Plattenverbindung erfolgt nach Fig. 15.

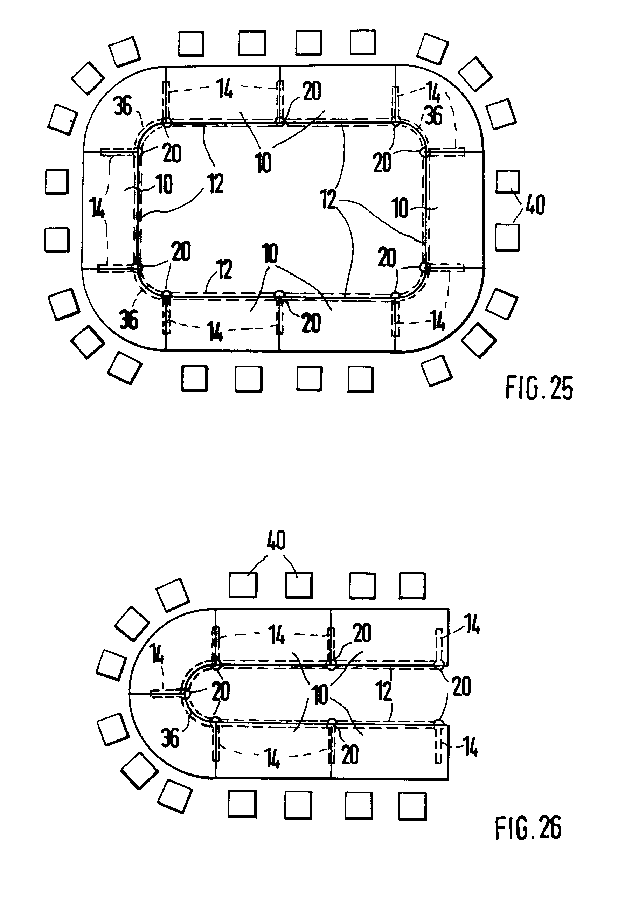

Die Rechteck-Bürotischkombination nach Fig. 25 hat einen großen inneren Rechteckfreiraum, der an den Längsseiten durch die Längsseiten von zwei aneinander gereihten Rechteck-Tischplatten 10 und an den Querseiten von der Längsseite einer Rechteck-Tischplatte 10 sowie in den Ecken von dem Innenradius der vier Viertelkreisring-Tischplatten 19 begrenzt ist. Das Tischgestell umfaßt zehn Tischbeine 20, die durch sechs Längstraversen 12 teilweise miteinander verbunden sind. Alle Tischbeine 20 sind ähnlich Fig. 16 mit der halben Oberseite belegt, aber an jedem Tischbein 20 stoßen zwei Tischplatten aufeinander. Diese Rechteck-Bürotischkombination kann um vier Plätze erweitert werden, wenn in jede Längsseite eine weitere Rechteck-Tischplatte 10 mit einem Tischbein 20 und Stützbein 14 sowie einer Längstraverse 12 einbezogen wird. Die in Fig. 25 gezeigte Rechteck-Tischkombination bietet Platz für 24 Personen und erfordert nur fünf verschiedene Teile des Bausatzes, nämlich Rechteck-Tischplatten 10, Viertelkreisring-Tischplatten 19, Tischbeine 20, Stützbeine 14 und Längstraversen 12. Werden entlang der Innenradien der Viertelkreisring-Tischplatten 19 halbkreisförmige Traversen vorgesehen, dann kann das Tischgestell als eine feste Einheit vormontiert werden.

Die U-förmige Bürotischkombination nach Fig. 26 hat an jeder Schenkelseite zwei Rechteck-Tischplatten 10, getragen von jeweils drei Tischbeinen 20 mit nach außen gerichteten Stützbeinen 14. Verbunden sind die an den Innenkanten der zusammengesetzten Tischfläche angeordneten Tischbeine 20 mittels vier Längstraversen 12. An einem Ende ist die U-förmige Bürotischkombination mit zwei Viertelkreisring-Tischplatten 19, die im Bereich ihrer aufeinander stoßenden Kanten mittels eines weiteren Tischbeines 20 mit einem Stützbein 14 getragen werden. Diese U-förmige Bürotischkombination bietet 14 Personen Platz und kann an jedem Schenkel mit einer Rechteck-Tischplatte 10, einer Längstraverse 12 und einem Tischbein 20 mit Stützbein 14 um jeweils zwei Plätze erweitert werden. Das Tischgestell kann dabei wieder mit zwei viertelkreisförmigen Traversen 36 zu einer festen Einheit zusammengefaßt werden.

## Patentansprüche

1. Bausatz für Bürotische aus Tischplatten und Tischgestell, bestehend aus
   a) Rechteck-Tischplatten, die mit dem Tischgestell verbindbar sind, und
   b) Tischbeinen mit vier im Bereich der oberen Stirnseite im Quadrat angeordneten Aufnahmen für Verbindungselemente,
   dadurch gekennzeichnet,
   daß die Verbindungselemente (11) als Verbindungsbolzen ausgebildet sind, die in allen vier Eckbereichen der Unterseite der Rechteck-Tischplatten (10) angebracht oder anbringbar sind,
   daß die Aufnahmen (11) in der oberen Stirnseite der Tischbeine (20) als Bohrungen mit mindestens einer Klemmschraube (26) ausgebildet sind, und daß die Tischbeine (20) im oberen Endbereich umlaufend Anschlußaufnahmen (22) für am Tischbein (20) abstehende Stützbeine (14) tragen.

2. Bausatz nach Anspruch 1,
   dadurch gekennzeichnet,
   daß mit den Stützbeinen (14) zusätzliche Streben (16) verbunden oder verbindbar sind, die die Rechteck-Tischplatten (10) unterstützen.

3. Bausatz nach Anspruch 1 oder 2,
   dadurch gekennzeichnet,
   daß die Tischbeine (20) als Kegelstumpf-Hohlsäulen und die Anschlußaufnahmen (22) als Bohrungen ausgebildet sind, daß in die oberen Stirnseiten der Kegelstumpf-Hohlsäulen Verbindungseinsätze (23) mit auf die Anschlußaufnahmen (22) abgestimmten Bohrungen (24) einsteckbar sind,
   daß die Kegelstumpf-Hohlsäulen mit Deckeln (28) verschließbar sind, in die die Aufnahmen (29) für die Verbindungselemente (11) der Tischplatten eingebracht sind,
   daß die Verbindungseinsätze (23) auf die Aufnahmen (29) der Deckel (28) ausgerichtete Aufnahme-Sacklochbohrungen (25) aufweisen und
   daß die Klemmschrauben (26) in diese Aufnahme-Sacklochbohrungen (25) der Verbindungseinsätze (23) münden.

4. Bausatz nach Anspruch 3,
   dadurch gekennzeichnet,
   daß die Klemmschrauben (26) in einem Endabsatz (33) des Verbindungseinsatzes (23) zugänglich sind, der aus der Kegelstumpf-Hohlsäule ragt, mittels eines umlaufenden Gummiringes (27) und mittels des Deckels (28) abdeckbar ist.

5. Bausatz nach Anspruch 3 oder 4,
   dadurch gekennzeichnet,
   daß der Endabsatz (33) des Verbindungseinsatzes (23) umlaufend mit zusätzlichen Bohrungen (24) für die Stützbeine (14) versehen ist, die in gleicher Winkelteilung eingebracht sind wie die Anschlußaufnahmen (22) der Kegelstumpf-Hohlsäulen.

6. Bausatz nach einem der Ansprüche 1 bis 5,
   dadurch gekennzeichnet,
   daß er zusätzlich Viertelkreis-Tischplaten (17) aufweist, deren Radius der Breite der Rechteck-Tischplatten (10) entspricht.

7. Bausatz nach einem der Ansprüche 1 bis 6,
   dadurch gekennzeichnet,
   daß er zusätzlich Halbkreis-Tischplatten (18) umfaßt, deren Radius der Breite der Rechteck-Tischplatten (10) entspricht.

8. Bausatz nach einem der Ansprüche 1 bis 7,
   dadurch gekennzeichnet,
   daß er zusätzlich Viertelkreisring-Tischplatten (19) umfaßt, bei denen die Differenz des Außenradius und des Innenradius der Breite der Rechtecktischplatten (10) entspricht.

9. Bausatz nach einem der Ansprüche 1 bis 8,
   dadurch gekennzeichnet,
   daß er zusätzlich Längs- und Quertraversen (12,13) umfaßt, die an die Länge und Breite der Rechteck-Tischplatten (10) angepaßt sind.

10. Bausatz nach einem der Ansprüche 1 bis 9,
    dadurch gekennzeichnet,
    daß die Breite der Rechteck-Tischplatten (10) der halben Länge der Rechteck-Tischplatten (10) entspricht.

**11.** Bausatz nach einem der Ansprüche 1 bis 10,
dadurch gekennzeichnet,
daß er zusätzlich viertelkreisförmige Traversen
(36) umfaßt, deren Radius dem Innenradius der
Viertelkreisring-Tischplatten (19) entspricht.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20

FIG.21

FIG. 22

FIG. 23

FIG. 24

14

FIG.25

FIG.26

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CH-A-461 732   (MAKO AG) <br> * Spalte 1 - Spalte 2; Abbildungen 1-4 * * <br> — — — | 1 | A 47 B 87/00 <br> A 47 B 13/02 <br> F 16 B 12/44 |
| Y | EP-A-0 377 770   (ISARIA DISPLAY GMBH & CO KG) <br> — — — | 1 | |
| A | EP-A-0 377 770   (* Spalte 6 - Spalte 13; Abbildungen 1-11 *) <br> — — — | 3,6 | |
| A | DE-U-8 815 919   (SIMON SCHREINERWERKSTÄTT GMBH) <br> * Abbildung 4 * * <br> — — — — — | 1 | |

| | RECHERCHIERTE SACHGEBIETE (Int. Cl.5) |
|---|---|
| | A 47 B <br> F 16 B |

Der vorliegende Recherchenbericht wurde für alle Patentansprüche erstellt

| Recherchenort | Abschlußdatum der Recherche | Prüfer |
|---|---|---|
| Den Haag | 06 Dezember 91 | NOESEN R.F. |